# EUROPEAN PATENT APPLICATION

(11) **EP 4 148 686 A1**
(43) Date of publication of application: **15.03.2023**
(21) Application number: 21195598.4
(22) Date of filing: 08.09.2021
(51) Int. Cl.: G06V 10/82, G06V 10/25, G06V 10/84, G06V 20/58

(54) **METHOD FOR NAVIGATING A VEHICLE THROUGH AN INTERSECTION**

(71) Applicant: Connaught Electronics Ltd., Tuam, County Galway (IE)
(72) Inventor: LEANG, Isabelle, 94000 Creteil (FR); YOGAMANI, Senthil, Tuam (IE); BURGER, Fabian, 94000 Creteil (FR)
(74) Representative: Jauregui Urbahn, Kristian

(57) **Abstract**

A method for navigating a vehicle (200) through an intersection comprises: analysing images acquired from vehicle cameras to identify and localise (12-1, 12-6) any road infrastructure objects within a 3D environment of the vehicle and to identify (12-3), localise and track (12-4) any potentially dynamic objects within the 3D environment of the vehicle. One or more potential trajectories are predicted for any identified dynamic object. Each identified object is assigned to a node of a graph, each node comprising a vector having a common set of elements including: an indicator of the class of object, one or more coordinates defining a location area within the 3D environment of the vehicle occupied by the object and a predicted trajectory for any dynamic object. A weight is assigned between each object of the graph and each other object of the graph as a function of the distance between the objects. The graph is resolved and combined with an identified type of upcoming intersection before being provided to a network (19) to provide a set of coordinates defining a drivable area (100) ahead of the vehicle.

## Description

### Field

The present invention relates to a method for navigating a vehicle through an intersection

### Background

The ability to safely navigate an ego vehicle, especially through a road intersection, is a useful function for Advanced Driver Assistance Systems (ADAS) in semi-autonomous and autonomous vehicles.

As will be well understood, navigating a vehicle through a road intersection is more complex than following a straight road, as the potential drivable area offers more options (turn left or right, go straight, cross traffic cycle) and the sequence of actions to be performed by the vehicle must take into account the behaviour and actions of any surrounding agents (actors) (neighbour vehicles/pedestrians) and the traffic laws (traffic light status, priority rules that set the order of the vehicles that can enter, road signage etc.) to avoid collisions.

In addition to that, other difficulties must be managed:
- country specific rules: traffic laws (e.g. left/right hand drive, priority management), traffic signs and road markings might differ from one country to another; and
- context specific rules: urban, rural and highway environments must be managed differently, e.g. tramways, bus and cycle lanes are frequent in urban roads.

Nvidia Drive Labs (https://blogs.nvidia.com/blog/2019/05/10/drive-labs-intersection-detection/) have developed a module based on Deep Neural Networks for detecting intersections, traffic lights and traffic signs from a front camera of a vehicle. However, this system is limited to delineating an intersection area with a bounding box and does not attempt to allow a vehicle to navigate through the intersection.

Autopilot from Tesla (https://www.tesla.com/autopilot) is capable of handling intersections. It is based on a combination of cameras and ultrasonic sensors.

Other works use imitation learning for end-to-end driving as disclosed by Bansal, Mayank, Alex Krizhevsky, and Abhijit Ogale. "ChauffeurNet: Learning to drive by imitating the best and synthesizing the worst", arXiv preprint arXiv:1812.03079 (2018), or end-to-mid driving including predicting trajectories of the neighbor vehicles and the ego vehicle such as disclosed in Thibault Buhet, Emilie Wirbel and Xavier Perrotton, "Conditional vehicle trajectories prediction in CARLA urban environment", Proceedings of the IEEE International Conference on Computer Vision Workshops, 2019; and Thibault Buhet, Emilie Wirbel, and Xavier Perrotton, "PLOP: Probabilistic poLynomial Objects trajectory Planning for autonomous driving", arXiv preprint arXiv:2003.08744 (2020).

It is an object of the present invention to provide an improved method for navigating a vehicle.

### Summary

According to the present invention, there is provided a method according to claim 1.

Embodiments of the present invention are based primarily on computer vision using a plurality of wide field of view cameras providing a 360° field of view around a vehicle for navigating the vehicle through a road intersection.

Embodiments do not rely on high definition maps other sensors such as radar, lidar, or ultrasonic sensors and treat every intersection as it is perceived for the first time.

In a further aspect, there is provided an automotive multi-camera vision system comprising a plurality of camera connected to a vehicle and arranged in such a way as their fields of view cover an environment surrounding the vehicle; and one or more processing units configured to perform the method of the invention.

In a still further aspect, there is provided a computer program with instructions, which, upon execution of the computer program by an automotive multi-camera vision system cause the system to perform the method of the invention.

### Brief Description of the Drawings

Embodiments of the invention will now be described, by way of example, with reference to the accompanying drawings in which:
Figure 1 is a schematic view of a vehicle including a navigation system according to an embodiment of the present invention;
Figure 2 illustrates the steps comprising a method for navigating a vehicle through an intersection according to an embodiment of the present invention;
Figure 3 illustrates in more detail modules for performing the steps of Figure 2;
Figure 4 illustrates different types of road intersection including: a) 2 roads, b) 3 roads, c) 4 roads, e) 5 roads and f) a roundabout with double lanes;
Figure 5 illustrates (a) an image captured with a vehicle front camera, (b) a distance map derived from the image, (c) a semantic segmentation mask derived from the image, (d) a motion segmentation mask derived from the image, and (e) 2D bounding boxes for objects detected within the image;
Figure 6 illustrates the input and output of an exemplary road classification decoder from Figure 3;
Figure 7 illustrate the components and sizes of a node feature vector for use within a graph neural network (GNN) employed within the drivable area prediction module of Figure 3;
Figure 8 is a top view illustrating road structures, neighbor agents and their trajectories around an ego vehicle according to an embodiment of the present invention; and
Figure 9 illustrates in more detail the drivable area prediction module of Figure 3.

### Description of the Embodiment

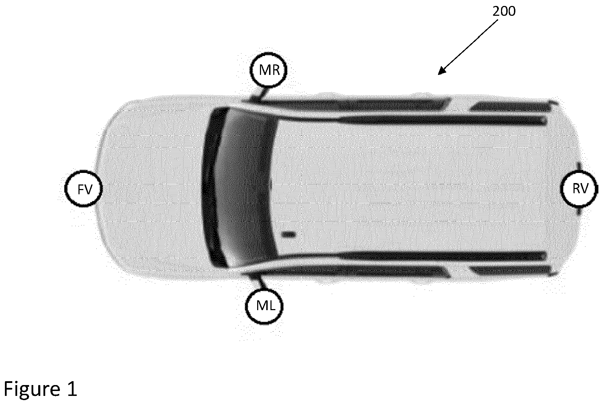

Referring now to Figure 1, there is shown a vehicle 200 including a navigation system according to an embodiment of the present invention. In common with conventional vehicles, the vehicle has at least 4 cameras in this case, front (FV), mirror left (ML), mirror right (MR) and rear (RV) providing a 360° field of view of the environment around the vehicle. The immediate environment around the vehicle is assumed to be generally planar and in the present specification, 3D coordinates refer to x, y coordinates on this plane relative to an origin which is typically centred on the ego vehicle 200, with the z coordinate extending vertically from this plane. The view from the cameras enables the system to identify, locate and track objects around the vehicle and in the case of dynamic objects, to anticipate their behaviour especially when crossing an intersection. In some embodiments, the cameras are wide field of view cameras with each camera having of field of view in excess of 150° around the horizontal plane. As such, it will be appreciated that there may be some overlap between the fields of view of the respective cameras. Also, it will be appreciated that the vehicle 200 may have more cameras or cameras in different locations than those shown, especially when the vehicle is a vehicle other than a car of the type shown in Figure 1.

In the embodiment, the cameras are described as producing images divided into R,G,B colour planes. However, it will be appreciated that the image information provided by the cameras can vary and in some cases could comprise information divided into intensity and chrominance planes, such as YUV; LAB; or YCC colour spaces. The cameras may also comprise a Bayer array providing more than 3 planes, for example, R, G, B, IR or R, G, B, W colour planes, where IR is near infra red image information and W is broad field white light. In some cases, fewer than 3 planes can be employed, for example, intensity only information may be employed in night-time driving conditions.

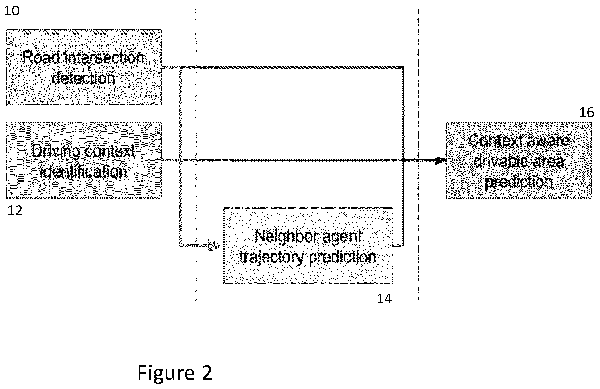

Referring now to Figure 2, embodiments of the present invention are based on dividing the problem of navigating a vehicle through a road intersection into 4 steps:
Road intersection detection (10) comprising detecting an upcoming road intersection and identifying the type of intersection (intersection detection and classification);
Driving context identification (12) comprising identifying different objects within the environment of the vehicle (freespace, neighbor agents, lanes, traffic lights/signs);
Neighbor agent trajectory prediction (14) comprising predicting respective trajectories for each dynamic neighbor agent; and
Context aware drivable area prediction (16) comprising predicting a drivable area, i.e. the area where the ego car can drive. Optionally, this step can also predict drivable areas for a limited number of dynamic neighbour objects in the vicinity of the ego vehicle.

Steps 10 and 12 can be based on proven camera-based standard perception modules performing, for example: semantic segmentation, 2D/3D object detection, motion detection and object tracking for detecting and localizing static road infrastructures (freespace, curb, lanes, road markings, traffic lights, traffic signs) and dynamic objects on or near the road (vehicle, cyclists, pedestrians). Note that, at any given time, dynamic objects may not be moving, for example, parked cars, that is, they are potentially dynamic. It will be appreciated that when such objects are not moving, no trajectory needs to be predicted or any predicted trajectory will be more limited than for a dynamic object which is moving.

Each of these various tasks can be executed using either algorithmic approaches, classical classifiers or Convolutional Neural Networks (CNN) and where a multi-processor platform is available, it is possible for these perception tasks to be executed parallel.

Step 14 comprising predicting the trajectory of the neighbour agents can again be based on conventional approaches such as disclosed by Buhet et al referenced above and again can be implemented using CNNs.

Step 16 employs a Graph Neural Network (GNN) that takes into account all the information generated at steps 10, 12 and 14 to provide a predicted driving path.

In the illustrated embodiment described in more detail below, predicted driving paths are provided both for the ego vehicle and for neighbour agents. However, it will be appreciated that in some implementations, a driving path for only the ego vehicle may be provided.

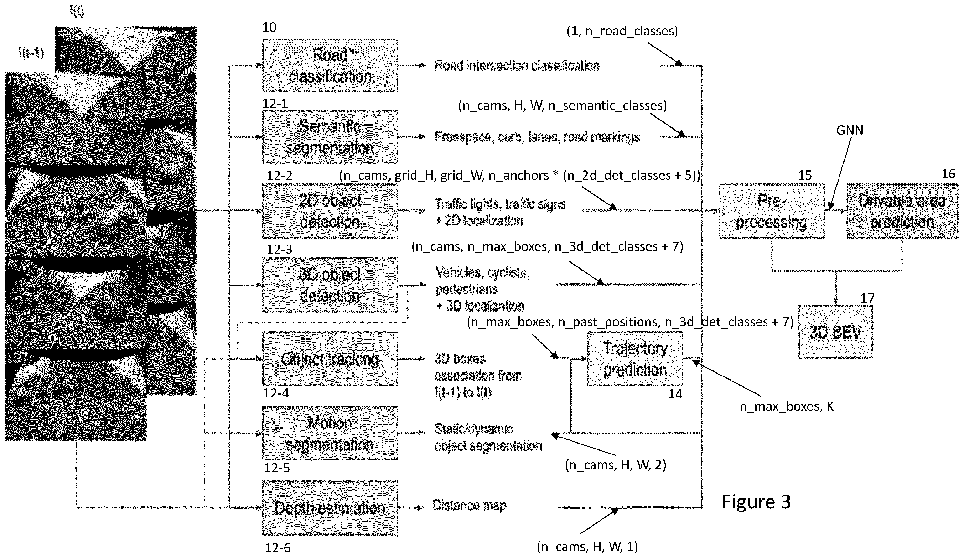

Referring now to Figure 3, in this embodiment, the different steps of a context-aware road intersection assist method are performed by a multi-task CNN followed by a Graph Neural Network (GNN) that takes as input n_cams images (1 per camera) at time step (t) and n_cams images at time step (t-1), where n_cams is the number of cameras and in the example, n_cams = 4.

It will be understood that some of the modules 10, 12, 14 and even 16 shown may include LSTM (long-short term memory) layers which retain some information from instances of the module running before a given instance and so hidden layer information not only from a given set of frames at time t and/or t-1, but also from preceding frames can be taken into account when producing their output. Thus, while some modules are shown as being fed with images from time t or t-1 alone, any module may draw information from previous images, for example, through previous instances of the module.

In general, the modules 10, 12 and 14 perform standard perception tasks that can be handled in parallel by specialized decoders in the CNN such as road classification, semantic segmentation, 2D/3D object detection, object tracking, motion segmentation and depth estimation.

In some embodiments, the tasks performed by the modules 10, 12-1 to 12-3 can share the same encoder layers which produce a compressed feature vector based on a combination of the input n_cams images at time t. Where the object tracking 12-4, motion segmentation 12-5 and depth estimation 12-6 modules take as input n_cams images from time t-1, these can also share the same encoder layers. It is also possible for all of the modules to share the same encoder.

Trajectory prediction 14 and drivable area prediction 16 are performed with a downstream CNN decoder and Graph Neural Network (GNN), respectively as they need to take information from the output of the previous modules 10, 12-1 to 12-6 as inputs.

We detail the different blocks composing the different steps of Figure 2 below.

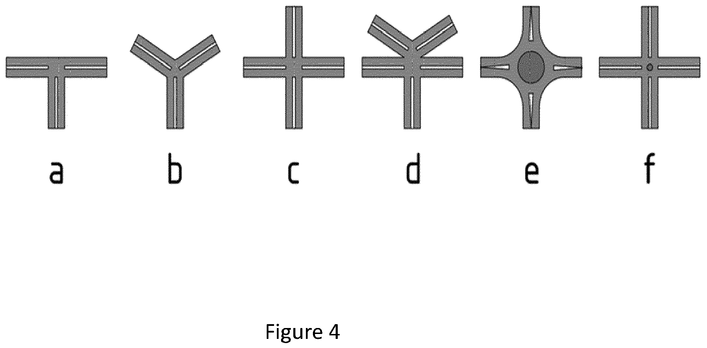

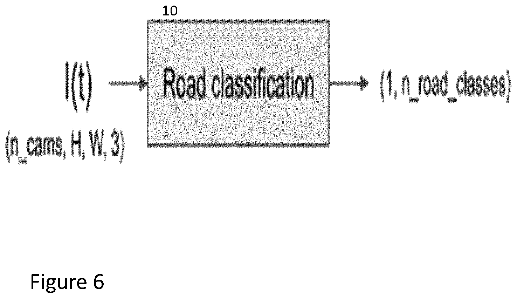

Referring to Figure 6, the encoder layers of the road classification module 10 take as input a vector based on n_cams images at time t of size (n_cams, H, W, 3). H is the image height, W is the image width and, in this case, there are 3 channels for (R,G,B). The classification module produces a one-hot vector of size (1, n_road_classes). Within the classification module 10, the decoder layers can comprise a fully connected layer with a softmax function to classify the road type at any given time from among the n_road_classes classes: 1 road, 2 roads, etc. as presented in Figure 4.

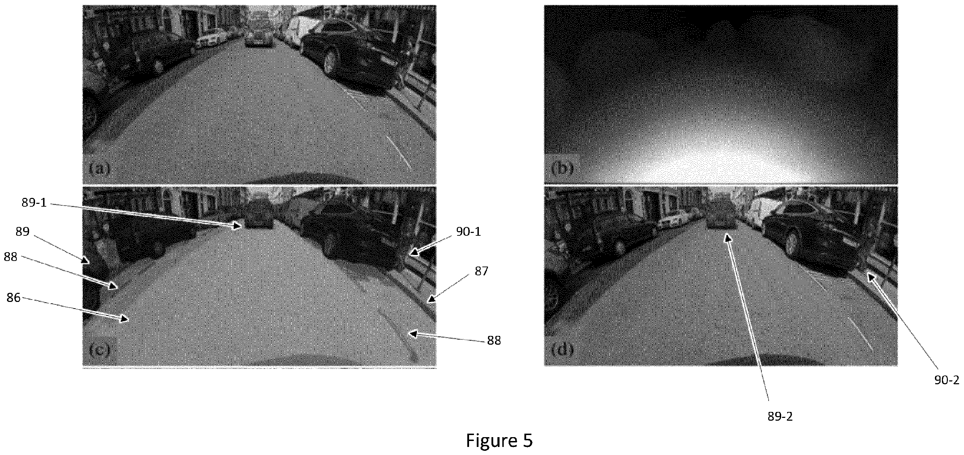

The driving context identification modules 12-1 to 12-6 mainly focus on:
- the detection, 3D localization and tracking over frames of dynamic objects (vehicles, cyclists, pedestrians) performed by 3D object detection 12-3, object tracking 12-4 and motion segmentation 12-5 modules.
- the detection and 2D localization of road traffic elements such as traffic lights, traffic signs (stop sign) or road markings (zebra crossing) that can be present in a road intersection. These elements are performed by 2D object detection 12-1 and semantic segmentation 12-2 modules.
- the detection and 2D localization of existing lanes/paths in the scene, the ego lane, the right/left lane, the bus/cycle lane, the tramway lane, etc. They can again be performed by the semantic segmentation module 12-1.
- Finally, a depth estimation module 12-6 estimates the 3D localization of objects detected or segmented in 2D (traffic lights, traffic signs, freespace, curb, lanes, etc.) by projecting their 2D localization from an acquired image to 3D space using distance information produce by the module 12-6. Thus, when a processor combines the output of the depth estimate module 12-6 with the output of either the semantic segmentation module 12-1 or the 2D object detection module 12-2, it can take regions identified within a segmentation mask such as shown in Figure 5(c) or objects detected by the 2D object detection module 12-2 and knowing their depth from the camera which acquired the image, project the 2D image coordinates of these region/objects into 3D coordinates of the environment surrounding the ego vehicle.

Implementation details of an exemplary encoder, semantic segmentation, 2D object detection, motion segmentation and depth estimation decoder are disclosed in Kumar, Varun Ravi et al "OmniDet: Surround View Cameras based Multi-task Visual Perception Network for Autonomous Driving", https://arxiv.org/pdf/2102.07448.pdf

In any case, the decoder of the semantic segmentation module 12-1 whether following a common encoder or a dedicated encoder, classifies each pixel into one of n_semantic_classes: freespace, curb, lanes (ego lane, right/left lane, bus/cycle lane, etc.), road markings (crossing zebra, etc.), etc. One example of such a mask is shown in Figure 5(c), here pixels of the image shown in Figure 5(a) are mapped to pixels classed as freespace (road) 86, curb 87, lane markings 88, vehicles 89, 89-1 and pedestrians 90-1.

The decoder of the 2D object detection module 12-2 can comprise a YOLO style decoder producing an output tensor of size (n_cams, grid_H, grid_W, n_anchors ^{∗} (n_2d_det_classes + 5)). Each anchor of the n_anchors is allocated a class from a set of 2D object classes and 5 further fields correspond to the 4 coordinates of the box (x, y, w, h) obtained from the output of the YOLO layer along with a detection score.

The decoder of the 3D object detection module 12-3 can be of the type described by Liu, Zechen et al, "SMOKE: Single-Stage Monocular 3D Object Detection via Keypoint Estimation", https://arxiv.org/pdf/2002.10111.pdf. Such a decoder produces an output tensor of size (n_cams, n_max_boxes, n_3d_det_classes + 7). The 7 fields correspond to the regression parameters (x, y, z, w, h, l, θ): 2D position (x, y), 3D height (z), 3D dimension (w, h, I) and 3D orientation angle (θ).

Turning now to the object tracking module 12-4, as mentioned this takes as input n_cams images at time t-1 and t, as well as the latest output of the 3D object detection module 12-3. Bergmann, Philipp et al "Tracking without bells and whistles", https://arxiv.org/pdf/1903.05625.pdf describe a 2D object tracker, but this approach can be adapted for 3D object tracking.

The output of the tracking module 12-4 provides for n_max_boxes of tracked objects at time t which correspond to a tensor of size (n_max_boxes, n_past_positions, n_3d_det_classes + 7), where each track corresponds to one unique object at time t and contains the past positions of the 3D box.

The motion segmentation decoder 12-5 is similar to the semantic segmentation decoder 12-1 except for each pixel there are only 2 classes: static and dynamic. Thus, the decoder 12-5 produces an output tensor of size (n_cams, H, W, 2) where for each pixel there is provided a probability of the pixel being either static or dynamic.

Finally, the depth estimation decoder 12-6 estimates for each pixel of the image at time t, a distance relative to the camera. Thus, the decoder 12-6 produces an output tensor of size (n_cams, H, W, 1) where the single channel corresponds to the distance map.

Note that the outputs of each of the modules 12-3 and 12-4 are limited to n_max_boxes as in the embodiment, there is a limit to the number of dynamic neighbour objects whose driving areas will be predicted at any given time. Nonetheless, it will be appreciated that the number of 3D objects detected at any given instant may differ from the number of objects being tracked. Equally, the history of past positions of a tracked object provided by the object tracking module 12-4 can be used to determine whether or not an object is or has become static or dynamic and so the module 12-5 may not be essential unless this can provide such results more readily than using the output of the object tracking module 12-4.

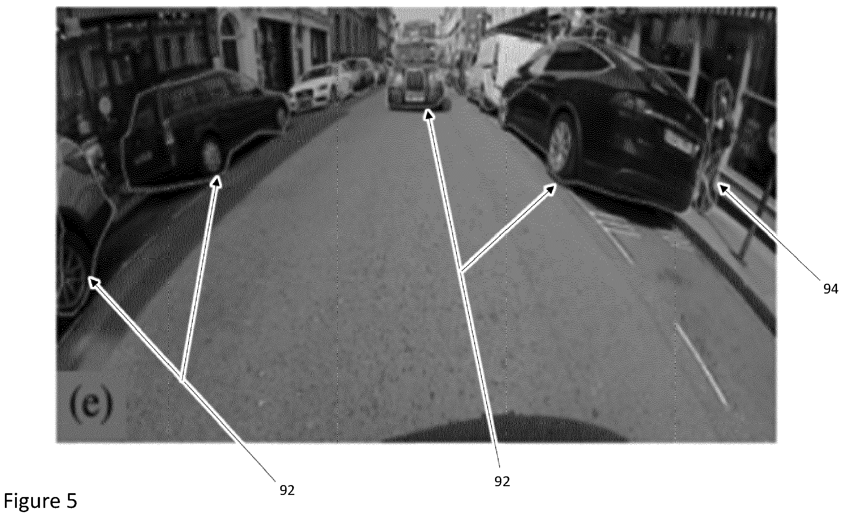

Referring now to Figure 5, in summary from each image produced by a camera, for example, Figure 5(a); the depth estimation decoder 12-6 produces a depth map, Figure 5(b); the semantic segmentation decoder 12-2 produces a mask, Figure 5(c); and the motion segmentation decoder 12-5, produces a mask, Figure 5(d) where in this case, only the pedestrian object 90-2 and the moving vehicle 89-2 are flagged as being dynamic objects whose trajectory needs to be predicted.

For every 3-D object detected by the module 12-3, tracked by the module 12-4 and verified as being dynamic, in this case by the motion segmentation module 12-5, the neighbour agent trajectory prediction module 14 produces one or more predicted trajectories. The module can be of the type described by Buhet et al referenced above to predict K possible trajectories (polynomials of degree 4) for each tracked dynamic object, each trajectory having a probability distribution. In this case, the outputs from object tracking 12-4 and motion segmentation 12-5 modules need to be pre-processed before being provided as inputs to the module 14 as the module requires a record of n_past_positions of each object for which a trajectory is to be predicted as well as an indicator of the class and status (static or dynamic) of the object.

Once the output of the modules 10-14 is available for any given frame t, it is processed by a pre-processor 15 to construct a GNN comprising a plurality of nodes, each corresponding to an object, whether a 2D object which has been localised in 3D space through combining the semantic and 2D object outputs of modules 12-1, 12-2 and 12-6; or a dynamic object whose trajectory has been predicted by the module 14. Each node is connected by edges which in this case encode the 3D coordinate space distance between the objects in the environment of the ego vehicle.

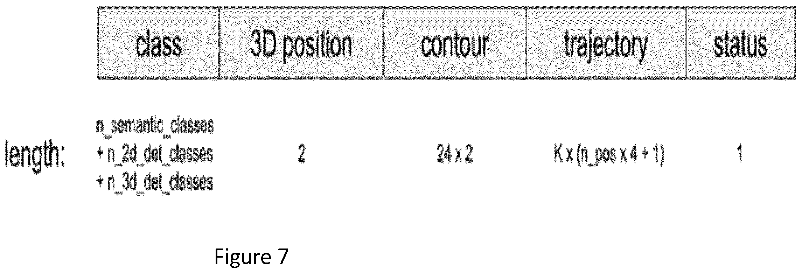

Referring to Figure 7, the pre-processor 15 computes for each node of the GNN, a feature vector comprising the following elements: [class vector, 3D position vector, polyline contour of object, polyline trajectory of object, status].
a) class vector:
   In the embodiment, the class of the semantic/2D/3D object is represented by a one-hot vector of size (n_semantic_classes + n_2d_det_classes + n_3d_det_classes).
b) 3D position vector in the vehicle coordinate system in top view coordinates:
   In the embodiment, the system coordinates used follow the ISO 8855 vehicle system. Thus, the 3D position of an object is represented by its two coordinates (X, Y) in the ego vehicle coordinate system, where X is along the longitudinal axis and Y the lateral axis.
   In the embodiment, the X,Y positions for semantic, 2D and 3D tracked objects are determined differently as follows:
   - Semantic objects: for each object, a contour is extracted from the semantic segmentation output by the module 12-1 and a 24 sided polygon corresponding to the contour is determined. In Figure 5(e), contours 92 are shown provided around regions corresponding to vehicles and a contour 94 is provided around a pedestrian. It will be appreciated that corresponding contours can also be generated around the curb 87 and lane marking regions 88 of Figure 5(c). One suitable technique for doing so is disclosed by Hazem Rashed et al, "Generalized Object Detection on Fisheye Cameras for Autonomous Driving: Dataset, Representations and Baseline", https://arxiv.org/abs/2012.02124. The 2D center (x, y) image coordinates of this polygon are projected into 3D space in the vehicle coordinate system, using the output from the depth estimation module 12-6.
   - 2D objects: for each 2D bounding box, the 2D center (x, y) image coordinates are again projected into 3D space using the depth map predicted by the depth estimation module 12-6.
   - 3D objects: as their 3D position is provided from the modules 12-3 and 12-4, the 3D coordinates of the center of the 3D bounding box can be readily determined.
c) polyline contour of object
   The contour of an object in 3D space is represented by a 24 sided polygon in the vehicle coordinate system, which is a vector of size 24 x 2 coordinates (X, Y).
   - Semantic objects: for each semantic object, the coordinates in image space of the 24 sided polygon 92, 94 which is derived from the contour of a semantic object are projected into 3D space, again using Rashed et al referenced above, to provide 24 x,y locations in 3D space defining a polyline around the 2D object. Thus, for example, the outline of the road, curb, lane and road markings determined in image space by the segmentation module 12-1 can be mapped onto the x,y plane over which the ego vehicle is assumed to be travelling.
   - 2D objects: In the embodiment, no contour is generated for the 2D objects such as traffic signs and traffic lights, produced by the module 12-2 and so this element of the vector is filled with zeros. (The x,y position in 3D space is sufficient.)
   - 3D objects: a 3D bounding box provided by the module 12-3 comprises its 8 corners. These coordinates are upsampled, to get the 24 points whose x,y coordinates in 3D space for the polygon are then determined.
   Given the above, it will be appreciated that if a vehicle, object or pedestrian class is employed by the modules 12-1 or 12-2, the x,y coordinates of the polyline contour for that object may overlap with the contour for the same object derived from detecting and tracking the object using the modules 12-3 to 12-5. It will be appreciated that in this case, duplicate nodes for an object can still be created within the GNN or in other implementations, where the 3-D object has been identified as being dynamic and has a predicated trajectory, a node in the GNN can be created for this object, but not from the 2-D object data. Equally, if a 3-D object is identified as being static, then a node in the GNN can be created based on the output of the module 12-1 or 12-2, but not from the 3-D object data.
d) polyline trajectory of object
   The vector is composed of K polylines of n_pos estimated future positions (means and variances of (X, Y)) with their associated probability. The size is K x (n_pos x 4 + 1).
   As explained above, a trajectory is only predicted for dynamic 3D objects - semantic objects and 2D objects don't have a trajectory and so this element of their vectors is filled with zeros.
e) status
   The static/dynamic status of an object is represented by a scalar of value 0 for static and 1 for dynamic.
   Semantic objects and 2D objects are assumed to be static. Only 3D objects can be static or dynamic as indicated in the embodiment by the motion segmentation module 12-5.

As indicated above, for each object node, there is a 3D coordinate location and so the relative Euclidean distance between each pair of objects can be calculated and used to provide values for each edge of the GNN. A sigmoid can be used to normalize the edge values between 0 and 1. Nonetheless, in general, objects close to the ego vehicle will have a greater effect on the final result than more distant objects.

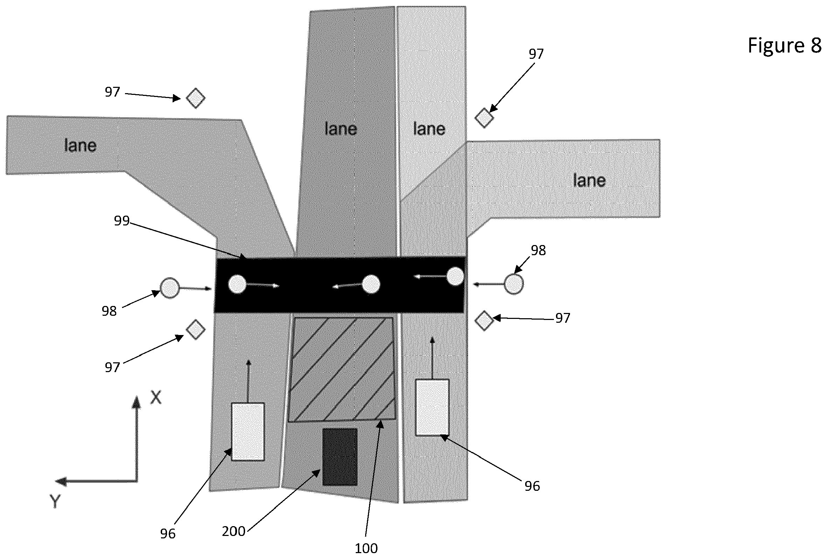

Figure 8 illustrates schematically an exemplary representation of the different nodes forming a GNN at a given instant. The size and shape of the ego vehicle 200 located at the origin of the 3D space is known. Polyline contours 96 (which can have as many as 24 vertices) are generated by projecting the respective box coordinates for 3D objects, in this case cars, identified and tracked by the modules 12-3 to 12-5 into 3D space. In this case, the contours 96 are shown as rectangles, but in practice they would have a more complex shape defined by their 24 vertices. The arrows extending from the contours 96 indicate that these are dynamic objects which will have a number of potential trajectories. The contours 98 indicate respective dynamic pedestrians again generated from the output of modules 12-3 to 12-5. Again, in this case, the contours 98 are shown as circles but in practice they would have a more complex shape defined by their 24 vertices.

In the example, a number of diamonds 97 indicate the locations of traffic signs/lights which have been identified and located by the modules 12-1 and 12-2.

In the example, a number of lanes are shown as well as a zebra crossing 99. In the embodiment, nodes in the GNN can correspond to individual lane and road markings identified by the module 12-1, with contours bounding those regions in an image being mapped to the 3D coordinate space. In other implementations, further processing of identified markings and identified freespace, including tracking such markings and freespace through a sequence of acquired image frames, can enable the construction of explicit objects corresponding to actual lanes and zebra crossings which are then provided as nodes within the GNN. In any case, whether such lane information is provided implicitly through nodes corresponding to their component markings and freespace or explicitly through lane or equivalent objects constructed based on an analysis of visible markings, it is the goal of the drivable area prediction module 16 to generate a contour 100 bounding a predicted driving area for the ego vehicle 200 at a time t.

It should also be appreciated that at any given time, once the information outlined above has been generated by the pre-processor 15, a birds eye view, BEV, 17 such as shown in Figure 8, can be provided for display within the vehicle cabin. This view can either completely comprise artificial objects, such as shown in Figure 8; or one or more of such artificial objects can be superimposed over a synthetic live-view constructed from the images provided by the vehicle cameras, using techniques such as described in German Patent Application No. 102019131971.4 (Ref: 2018PF02667/ V25-2103-14DE).

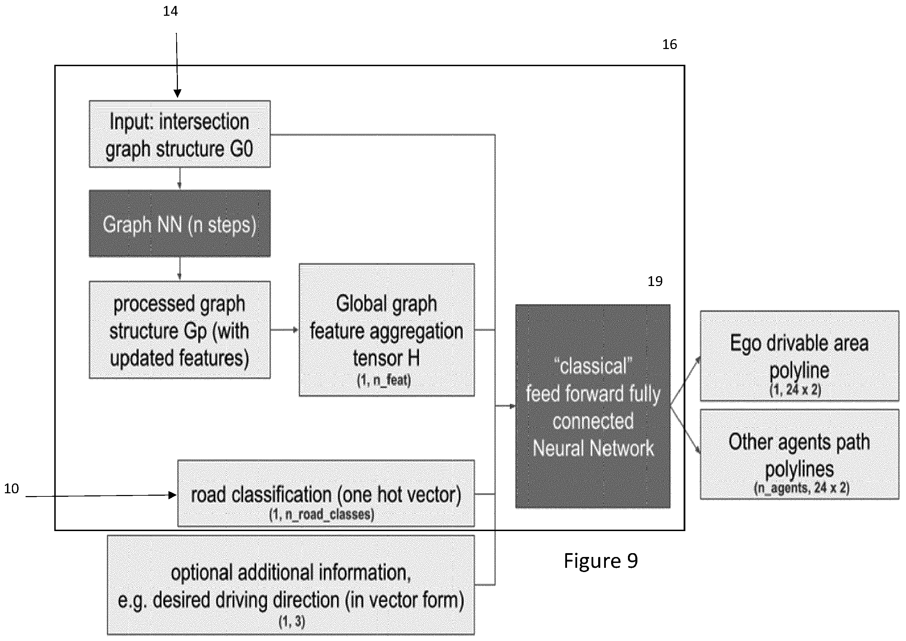

Once the GNN for a given time t has been generated, a graph network function is applied to propagate node information along its spatial connections via the edges and to update the feature vectors of the nodes, in the present example, using a mean of adjacent node vectors weighted by distance. Examples of solving a GNN are disclosed by Sumesh Thakur et al, "Dynamic Edge Weights in Graph Neural Networks for 3D Object Detection", https://arxiv.org/pdf/2009.08253.pdf. This operation is repeated several times (n steps) to allow information to propagate from further away nodes. Once these iterations are complete, the updated feature vectors for the nodes of the GNN are summed to produce a graph feature vector/tensor H of fixed size, Figure 9.

It will therefore be appreciated that although a variable number of objects may be in the environment of the ego vehicle at any given time, each with different characteristics as described above, this information can be incorporated into a GNN with a variable number of nodes to produce a fixed size output tensor H which can then be fed to a classical feed forward network 19 whose output, in the embodiment, comprises a set of 24 x,y coordinates in 3D space defining a polyline bounding the predicted driving area for the ego vehicle 200 at time t.

As shown in Figure 9, the input to the network 19 is a concatenation of the GNN output tensor H, the road classification determined by the module 10 as well as possibly features including desired directions from a navigation system (turn left, straight, turn right) provided, for example, as a one hot vector coding of size (1, 3).

In the embodiment, especially if the network 19 is also to provide predicted paths for a fixed number of dynamic objects as well as the ego vehicle 200, features from each node of the original GNN before the application of the graph network function corresponding to a dynamic object can also be concatenated to the above information. As mentioned, where the number of dynamic objects detected in the environment of the ego vehicle 200 is greater than a maximum, then only the node information for the n_agents nearest to the ego vehicle is used.

In one embodiment, the network 19 comprises a plurality of fully connected layers followed by a 1x1 convolution layer to produce 24 x,y coordinates defining the polyline contour for the predicted drivable path 100. Other network structures are also possible, for example, using YOLO layers to predict one or more likely rectangular areas within the field of view bounding a drivable area. Any contiguous likely areas can then be grouped and bound by a polyline having 24 x,y coordinates. In other cases, the last layers of the network could comprise fully connected nodes or multi-layer perceptron layers with each providing an output corresponding to a node of the polyline. In still other cases, the last layers of the network could comprise a heatmap with each layer of the heatmap corresponding to a node of the polyline. In some embodiments, where the predicted driving paths of other dynamic agents are provided, then the network produces 24 x,y coordinates corresponding to each dynamic object, up to n_agents, for which node data is provided as input to the network.

As will be appreciated, embodiments of the invention employ pre-existing modules 10, 12-1 to 12-6 and 14 whose weights can be locked and which do not need to be trained. The preprocessing module 15 is essentially algorithmic in setting up the GNN based on the information provided by the pre-trained modules and so does not need to be trained.

In one embodiment, in order to train the network 19, for each prediction made for an instant of sample data, an area between the coordinates of a ground truth polyline and a predicted polyline is determined and a loss function is based on minimizing this area. It will be appreciated that in some cases the prediction for the polyline coordinates may be quite good, but there may be sharp deviations between a limited number of corresponding points. One suitable scheme for ensuring such points do not dominate the overall path loss where the prediction is only locally incorrect is disclosed in Jonathan T. Barron, "A General and Adaptive Robust Loss Function", https://arxiv.org/abs/1701.03077. As well as the coordinates of the polyline contour, a coefficient such as a Bhattacharyya coefficient can be provided as a measure of the overlap between a ground truth polyline and a predicted polyline and training can also be based on maximising this coefficient.

As will be understood, in order to train the GNN and network 19, a large body of annotated data is required i.e. sets of polylines defining predicted driving areas for the ego vehicle 200 and neighbour agents 96, 98 corresponding to successive sequences of input images received at t-1 and t. This data can be generated for example, by tracking an exemplary ego vehicle being driven either in a real-world or simulated environment and defining the polylines for time t according to where the ego vehicle 200 and agents 96, 98 drove subsequently. Clearly, in order to generate negative examples, it is better to employ a simulated environment.

Note that the present application is primarily concerned with determining a predicted driving area 100 for any given instant in time t. The embodiment can be expanded to also attempt to predict the appropriate speed for the vehicle. In order to do so, the speed of the ego vehicle 200 may need to be taken into account as part of the additional information provided to the drivable area prediction module 16.

## Claims

1. A method for navigating a vehicle (200) through an intersection comprising:
obtaining a sequences of images from a plurality of cameras providing a field of view surrounding the vehicle, at least one of said cameras comprising a forward facing camera;
analysing each image to identify and localise (12-1, 12-6) any static objects including: road surface, kerbs, road markings, traffic signs and traffic lights within a 3D environment of the vehicle;
analysing sequences of images provided from each of said plurality of cameras to identify (12-3), localise and track (12-4) any dynamic objects within the 3D environment of the vehicle;
predicting (14) one or more potential trajectories for at least some identified dynamic objects;
assigning each identified object to a node of a graph, each node comprising a vector having a common set of elements including: an indicator of the class of object, one or more coordinates defining a location area within the 3D environment of the vehicle occupied by the object and any predicted trajectory for a dynamic object;
assigning a weight between each object of the graph and each other object of the graph as a function of the distance between the objects within the 3D environment of the vehicle;
resolving the graph into a tensor (H);
identifying (10) a type of upcoming intersection through analysis of an image from said forward facing camera;
combining said identified intersection type with said tensor;
providing said combined intersection type and tensor information to a feed forward network (19) to provide a set of coordinates within the 3D environment of the vehicle defining a drivable area (100) ahead of said vehicle; and
providing said set of coordinates to a vehicle control system for controlling the path of the vehicle through said intersection.

2. The method of claim 1 comprising:
obtaining a desired driving direction from a vehicle navigation system; and
combining said identified intersection type and said tensor with said desired driving direction prior to providing said combined information to said feed forward network.

3. The method of claim 1 further comprising:
combining said identified intersection type and said tensor with object information for up to a maximum number of dynamic objects nearest the vehicle;
wherein said feed forward network is configured to provide a set of coordinates defining a respective predicted path ahead of each of said nearest dynamic objects.

4. The method of claim 1 comprising for at least some identified static objects, determining a respective set of x,y coordinates of a polyline in the 3D environment of the vehicle bounding said object; and for each identified dynamic object determining a respective set of x,y coordinates of a polyline in the 3D environment of the vehicle bounding said object and wherein said vector includes an element including said coordinates.

5. The method of claim 1 comprising: concatenating said node information for a limited number of dynamic objects with said tensor, and wherein said is network (19) configured to provide a set of coordinates within the 3D environment of the vehicle defining a predicated area ahead of said dynamic object.

6. The method of claim 1 comprising determining if at any given time, a dynamic object is moving or not, and only performing said step of predicting (14) one or more potential trajectories for any identified dynamic object which is determined to be moving.

7. The method of claim 6 wherein said set of elements includes a status element indicating whether a dynamic object is moving or not.

8. An automotive multi-camera vision system comprising:
a plurality of cameras (RV, TR; FV, RV) connected to a vehicle (200) and arranged in such a way as their fields of view cover an environment surrounding the vehicle; and
one or more processing units configured to perform the method of any one of the preceding claims.

9. Computer program with instructions, which, upon execution of the computer program by an automotive multi-camera vision system according to claim 8, cause the system to perform a method according to any one of claims 1 to 7.
